# EUROPEAN PATENT APPLICATION

(11) **EP 4 440 229 A1**
(43) Date of publication of application: **02.10.2024**
(21) Application number: 22909663.1
(22) Date of filing: 28.11.2022
(51) Int. Cl.: H04W 74/08, H04W 72/04

(54) **CHANNEL ACCESS METHOD AND DEVICE AND STORAGE MEDIUM**

(30) Priority: 21.12.2021 CN 202111574724
(71) Applicant: ZTE Corporation, Shenzhen Guangdong 518057 (CN)
(72) Inventor: XING, Weimin, Shenzhen, Guangdong 518057 (CN); LU, Youxiong, Shenzhen, Guangdong 518057 (CN); HE, Haigang, Shenzhen, Guangdong 518057 (CN)
(74) Representative: Iannone, Carlo Luigi
(86) International application number: PCT/CN2022/134561
(87) International publication number: WO 2023/116348

(57) **Abstract**

Provided are a channel access method, a device, and a storage medium. The channel access method applied to a first communication node includes that the feedback information of a second SL transmission corresponding to a first SL transmission and the SL cast type of the second SL transmission are acquired, where the second SL transmission is a transmission performed before the first SL transmission and within the channel occupation time acquired by using a first channel access type; that a contention window adjustment policy of the first SL transmission is determined according to the feedback information and the SL cast type; and that a contention window corresponding to the first SL transmission is adjusted according to the contention window adjustment policy to enable the first communication node to perform channel access according to the contention window.

## Description

### TECHNICAL FIELD

The present application relates to the field of communication, for example, a channel access method, a device, and a storage medium.

### BACKGROUND

Sidelink (SL) communication runs on licensed frequency bands or dedicated frequency bands. For example, vehicle-to-anything (V2X) communication may run on frequency bands used for the Internet of Vehicles. With the development of SL communication, the demand for SL transmissions on traditional unlicensed frequency bands is increasingly strong. Before an SL transmission is performed on an unlicensed frequency band, a channel access procedure is required, which is generally referred to as a Listen-Before-Talk (LBT) procedure, according to a relevant frequency band usage specification, to avoid interference with devices in other systems. For SL transmissions, data cast types include unicast, broadcast, and groupcast. Therefore, for SL communication devices of different cast types, how to adjust contention windows is an urgent problem to be solved.

### SUMMARY

Embodiments of the present application provide a channel access method. The channel access method is applied to a first communication node and includes the following.

Feedback information of a second SL transmission corresponding to a first sidelink (SL) transmission and an SL cast type of the second SL transmission are acquired, where the second SL transmission is a transmission performed before the first SL transmission and within channel occupation time acquired by using a first channel access type; a contention window adjustment policy of the first SL transmission is determined according to the feedback information and the SL cast type; and a contention window corresponding to the first SL transmission is adjusted according to the contention window adjustment policy to enable the first communication node to perform channel access according to the contention window.

Embodiments of the present application provide a channel access method. The channel access method is applied to a second communication node and includes the following.

Feedback information of a second SL transmission, corresponding to a first SL transmission, and an SL cast type of the second SL transmission are transmitted to a first communication node to enable the first communication node to determine a contention window adjustment policy of the first SL transmission according to the feedback information and the SL cast type, and a contention window corresponding to the first SL transmission is adjusted according to the contention window adjustment policy to enable the first communication node to perform channel access according to the contention window, where the second SL transmission is a transmission performed before the first SL transmission and within channel occupation time acquired by using a first channel access type.

Embodiments of the present application provide a channel access device. The channel access device includes a communication module, a memory, and one or more processors. The communications module is configured to perform communication interaction with another communication node. The memory is configured to store one or more programs. When executed by the one or more processors, the one or more programs cause the one or more processors to perform the method provided in any preceding embodiment.

Embodiments of the present application provide a storage medium for storing a computer program. When the computer program is executed by a processor, the method provided in any preceding embodiment is performed.

### BRIEF DESCRIPTION OF DRAWINGS

FIG. 1 is a diagram illustrating the configuration of an LBT duration according to an embodiment of the present application.
FIG. 2 is a diagram of a sequence relationship between a first SL transmission and a second SL transmission according to an embodiment of the present application.
FIG. 3 is a flowchart of a channel access method according to an embodiment of the present application.
FIG. 4 is a flowchart of another channel access method according to an embodiment of the present application.
FIG. 5 is a structural block diagram of a channel access apparatus according to an embodiment of the present application.
FIG. 6 is a structural block diagram of another channel access apparatus according to an embodiment of the present application.
FIG. 7 is a structural diagram of a channel access device according to an embodiment of the present application.

### DETAILED DESCRIPTION

Embodiments of the present application are described hereinafter in conjunction with the drawings. The present application is described below in conjunction with embodiments and the drawings. The examples listed hereinafter are intended to explain the present application and not to limit the scope of the present application.

Direct communication may also be referred to as sidelink communication. Hereinafter sidelink communication refers to all direct communication. SL communication may run on licensed frequency bands or dedicated frequency bands. For example, V2X communication may run on frequency bands specially used for the Internet of Vehicles. With the development of SL communication, the demand for SL transmissions on traditional unlicensed frequency bands is increasingly strong. Before an SL transmission is performed on an unlicensed frequency band, a channel access procedure is required, which is generally referred to as an LBT procedure, according to a relevant frequency band usage specification, to avoid interference with devices in other systems. Generally, if an internal detection channel resource in a detection duration corresponding to the LBT procedure is determined to be idle (LBT is successful), a user equipment (UE) can continue to perform transmission; otherwise, the UE needs to give up transmission. The new radio on unlicensed band (NR-U) defines multiple LBT procedures (also referred to as channel access procedures) for different scenarios. The duration of the LBT performed before the transmission in such a procedure may be a fixed value (second channel access type, or type 2) or a random value (first channel access type, or type 1). For example, for the first channel access type, the LBT duration may be a random number, and a parameter related to the random number (set to N) is a contention window (CW). The random number N of the LBT duration is generally initialized as a random number between [0, CW]. The value of the CW is not fixed. Different transmission conditions and different channel access priorities may correspond to different competition windows.

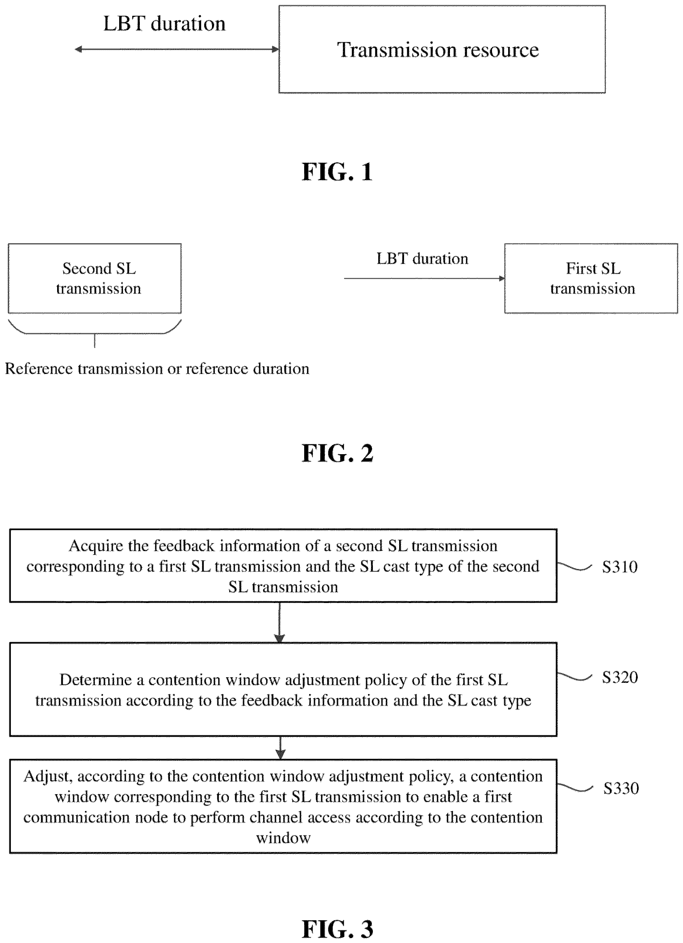

A general LBT procedure (also referred to as a channel access procedure) occurs before a device (which may be a base station or a terminal) performs transmission, and the span of the length of the LBT procedure in time may be referred to as an LBT duration (which may include one or more sensing slots). FIG. 1 is a diagram illustrating the configuration of an LBT duration according to an embodiment of the present application. As shown in FIG. 1, when a channel within the LBT duration is determined as an idle channel, the device can perform transmission.

In the case where the LBT duration is a random value (first channel access type, type 1), channel access may be divided into different channel access priority classes (CAPCs). Contention windows corresponding to different CAPCs may also be different. *CWₚ* may denote a contention window corresponding to the channel access whose CAPC is p. The minimum value that may be used for *CWₚ* is denoted as *CW*_{*p,*min}. The maximum value that may be used for *CWₚ* is denoted as *CW*_{*p,*max}. For example, the longer the LBT duration, the longer the duration of the detection required for channel access. For the LBT duration of type 1 access, for an access procedure with a priority of p, the LBT is generally initialized as *T_{d}* + *N*T*_{*s*1}*. T_{d}* denotes a backoff duration. N is a random integer. *Ts*₁ denotes the duration of one LBT sensing slot (generally 9 us). It conforms to the uniform distribution between [0, *CWₚ*]. The larger the contention window, the longer the corresponding LBT duration will be with a greater probability.

In an SL communication system, when a service needs to be transmitted between devices, the service data between the devices is not forwarded by another network device but is directly transmitted from a data source device to a target device, that is, direct communication is conducted between the devices. SL communication has multiple cast types.

Unicast: For unicast, only a specific device is a receiving end, and the receiving end feeds back received data. Here feedback may be ACK feedback or NACK feedback. That is, when the receiving end performs receiving correctly, ACK is fed back; and when the receiving end performs receiving incorrectly, NACK is fed back.

Groupcast: For groupcast, only a specific group of devices are receiving ends, and the receiving ends feed back received data.

Groupcast type 1 (i.e., first groupcast type): Feedback includes only negative acknowledgement (NACK) feedback. That is, in the case where a receiving end performs receiving correctly, no feedback is performed; and in the case where receiving is performed incorrectly, the NACK information is fed back. In an example, a transmitting end uses the same resource to receive feedback information from all receiving ends. For example, all the receiving ends use the same parameter, for example, the same member ID, when acquiring a feedback resource. In this case, the feedback resource acquired by all the receiving ends is the same.

Groupcast type 2 (i.e., second groupcast type): Feedback may be acknowledgement (ACK) feedback or NACK feedback. That is, when a receiving end performs receiving correctly, the ACK information is fed back; and when receiving is performed incorrectly, the NACK information is fed back. In an embodiment, the transmitting end uses the same resource to receive the ACK feedback information of the receiving ends and uses another resource to receive the NACK feedback information of the receiving ends. For example, all the receiving ends use the same group of parameters when acquiring an ACK feedback resource and use another group of parameters when acquiring a NACK feedback resource. For example, all the receiving ends use the same member ID x to acquire an ACK resource and use the same member ID y to acquire an ACK resource. In this case, the ACK feedback resource or NACK feedback resource acquired by all the receiving ends is the same.

Groupcast type 3 (i.e., third groupcast type): Feedback may be ACK feedback or NACK feedback. That is, in the case where a receiving end performs receiving correctly, the ACK information is fed back; and in the case where receiving is performed incorrectly, the NACK information is fed back. Moreover, the transmitting end uses corresponding resources to receive the feedback information of different receiving ends. For example, the receiving ends use a corresponding group of parameters when acquiring feedback resources. For example, one receiving end uses its member ID to acquire a feedback resource, and the member ID may be configured by a high layer. With the configuration of different member IDs, feedback resources acquired by various receiving ends may be different or orthogonal.

Broadcast: For broadcast, all surrounding UEs may be receiving ends. The receiving ends do not feed back received data; that is, no ACK feedback or NACK feedback exists. In addition, groupcast and unicast may also disable feedback. That is, a receiving end of groupcast and a receiving end of unicast do not perform feedback.

For SL transmissions, data cast types include unicast, broadcast, and groupcast. Regarding a method for determining or adjusting a contention window for the special design of SL communication, the present application is used for solving the channel access problem of a device communicating in an unlicensed frequency band and includes a method for adjusting a contention window in different cast types (unicast, groupcast, and broadcast) under different conditions.

In embodiments of the present application, a contention window adjustment policy of the first SL transmission is determined according to the feedback information of one or more second SL transmissions before the first SL transmission and the SL cast type of the one or more second SL transmissions. FIG. 2 is a diagram of a sequence relationship between a first SL transmission and a second SL transmission according to an embodiment of the present application. As shown in FIG. 2, the second SL transmission is located before the first SL transmission.

In an example, before transmitting SL signals, a UE performs the preceding first channel access type (for example, uses type 1 channel access), which is referred to as the first SL transmission as shown in FIG. 2. In an example, the channel access priority class of the first SL transmission is p. In an example, the UE performs one or more second SL transmissions on one occasion before the first SL transmission. A second SL transmission may also be referred to as a reference SL transmission. A transmission time period corresponding to the one or more second SL transmissions may be referred to as a reference duration. The contention window adjustment policy corresponding to the first SL transmission is determined according to different conditions of the one or more second SL transmissions.

In an example, a second SL transmission is a transmission performed within the channel occupation time acquired by the UE using the first channel access type. In an example, the priority of a second SL transmission may be the same as the priority of the first SL transmission. In an example, a second SL transmission is the latest transmission or first transmission performed within the channel occupation time acquired by the UE using the first channel access type; alternatively, second SL transmissions are a plurality of transmissions performed within the acquired channel occupation time.

In an example, a second SL transmission is an SL transmission for which hybrid automatic repeat request (HARQ) feedback is enabled. In an example, a second SL transmission may correspond to one HARQ feedback type or one cast type, for example, SL unicast for which HARQ feedback is enabled (the HARQ feedback type is unicast ACK/NACK), SL groupcast type 1 (the HARQ feedback type is only groupcast NACK), or SL groupcast type 2 (the HARQ feedback type is groupcast ACK/NACK).

In an example, the feedback success rate of a second SL transmission is determined according to the feedback information of the second SL transmission or the cast type of the second SL transmission; and in an example, it is determined whether the feedback success rate of the second SL transmission satisfies requirements, and thus a contention window corresponding to the first SL transmission is adjusted according to whether the feedback success rate of the second SL transmission satisfies requirements.

In an embodiment, FIG. 3 is a flowchart of a channel access method according to an embodiment of the present application. This embodiment may be performed by a first communication node. The first communication node may be a terminal (for example, a user equipment). As shown in FIG. 3, this embodiment includes S310 to S330.

In S310, the feedback information of a second SL transmission corresponding to a first SL transmission and the SL cast type of the second SL transmission are acquired.

The second SL transmission is a transmission performed before the first SL transmission and within the channel occupation time acquired by using a first channel access type. In the embodiment, the feedback information is configured to represent whether a second communication node successfully receives the service data sent by the first communication node. In an actual communication procedure, the feedback information includes at least one of ACK information or NACK information. In the case where the second communication node successfully receives the service data, the second communication node feeds back ACK information to the first communication node. In the case where the second communication node does not successfully receive the service data, the second communication node feeds back NACK information. The second communication node refers to a receiving end of the service data. The first communication node refers to a transmitting end of the service data. In the embodiment, the SL cast type includes unicast, groupcast, and broadcast. In an actual operation procedure, in a broadcast scenario, the second communication node as the receiving end does not feed back the received service data, that is, no ACK information or NACK information is fed back. In this case, that the SL cast type includes unicast and groupcast is described.

In S320, a contention window adjustment policy of the first SL transmission is determined according to the feedback information and the SL cast type.

The contention window adjustment policy is a policy for adjusting the length value of a contention window corresponding to the first SL transmission. In an embodiment, the contention window adjustment policy includes one of a first adjustment policy, a second adjustment policy, or a third adjustment policy. The first adjustment policy is configured to adjust the window length value of the contention window to the allowed minimum value or the next allowed smaller window length value. The second adjustment policy is configured to adjust the window length value of the contention window to the next allowed greater window length value. The third adjustment policy is configured to keep the window length value of the contention window unchanged. In the embodiment, the first adjustment policy may be an operation for reducing the window length value of the contention window corresponding to the first SL transmission, the second adjustment policy may be an operation for increasing the window length value of the contention window corresponding to the first SL transmission, and the third adjustment policy may be an operation for keeping the window length value of the contention window corresponding to the first SL transmission unchanged.

In S330, the contention window corresponding to the first SL transmission is adjusted according to the contention window adjustment policy to enable the first communication node to perform channel access according to the contention window.

In the embodiment, after the contention window adjustment policy of the first SL transmission is determined according to the feedback information of the second SL transmission and the SL cast type of the second SL transmission, the window length value of the contention window corresponding to the first SL transmission is adjusted according to the contention window adjustment policy to enable the first communication node to perform channel access on an unlicensed frequency band according to the contention window after adjustment, thereby guaranteeing the full utilization of the contention window and improving the channel access efficiency of the first SL transmission.

In an embodiment, that the second SL transmission is the transmission performed before the first SL transmission and within the channel occupation time acquired by using the first channel access type includes one of that the second SL transmission is the latest transmission performed within the acquired channel occupation time, that the second SL transmission is the first transmission performed within the acquired channel occupation time, or that second SL transmissions are a plurality of transmissions performed within the acquired channel occupation time. In the embodiment, in the case where the second SL transmissions are a plurality of transmissions performed within the acquired channel occupation time, the first communication node may average window length values of contention windows corresponding to all second SL transmissions and determine the contention window adjustment policy of the first SL transmission according to the average value.

In an embodiment, that the contention window adjustment policy of the first SL transmission is determined according to the feedback information and the SL cast type includes that a feedback success rate of the second SL transmission is determined according to the feedback information of the second SL transmission in the SL cast type and that the contention window adjustment policy of the first SL transmission is determined according to the feedback success rate and a preset feedback success rate threshold. In the embodiment, the feedback success rate of the second SL transmission may be represented by the number of second SL transmissions when the feedback information is the ACK information. The preset feedback success rate threshold is configured to represent whether success rate requirements are met. When the feedback success rate reaches the preset feedback success rate threshold, the first communication node meets success rate requirements. When the feedback success rate does not reach the preset feedback success rate threshold, the first communication node does not meet success rate requirements.

In an embodiment, that the feedback success rate of the second SL transmission is determined according to the feedback information of the second SL transmission in the SL cast type includes that it is determined that the second SL transmission is of the unicast cast type, that the number of second SL transmissions when the feedback information is the ACK information is determined, and that the feedback success rate of the second SL transmission is determined according to the number of second SL transmissions when the feedback information is the ACK information. In the embodiment, one second SL transmission carries one transmission block. Moreover, one transmission block corresponds to one piece of feedback information. The number of second SL transmissions when the feedback information is the ACK information may also be the number of transmission blocks when the feedback information is the ACK information.

In an embodiment, each second SL transmission includes at least one data block. Each data block corresponds to one piece of feedback information. The SL cast type is a unicast transmission. That the feedback success rate of the second SL transmission is determined according to the feedback information of the second SL transmission in the SL cast type includes that the number of data blocks is determined when the feedback information is the ACK information when the second SL transmission is the unicast transmission and the feedback success rate of the second SL transmission is determined according to the number of data blocks of the ACK information. In the embodiment, each second SL transmission may include one or more data blocks. Moreover, each data block corresponds to one piece of feedback information. That is, one second SL transmission may correspond to multiple pieces of feedback information. In the embodiment, the number of data blocks of the ACK information is greater than or equal to the number of corresponding second SL transmissions when the feedback information is the ACK information. In the embodiment, in the case where the SL cast type is unicast and where the feedback information may include the ACK information and the NACK information, the feedback success rate of the second SL transmission is determined.

In an embodiment, that the contention window adjustment policy of the first SL transmission is determined according to the feedback success rate and the preset feedback success rate threshold includes one of the following.

When the feedback success rate of the second SL transmission reaches the preset feedback success rate threshold, each contention window corresponding to each channel access priority class is adjusted according to the first adjustment policy; when the feedback success rate of the second SL transmission reaches the preset feedback success rate threshold, a contention window corresponding to a channel access priority class corresponding to the first SL transmission is adjusted according to the first adjustment policy; when the feedback success rate of the second SL transmission does not reach the preset feedback success rate threshold, each contention window corresponding to each channel access priority class is adjusted according to the second adjustment policy; or when the feedback success rate of the second SL transmission does not reach the preset feedback success rate threshold, the contention window corresponding to the channel access priority class corresponding to the first SL transmission is adjusted according to the second adjustment policy.

In the embodiment, that each contention window corresponding to each channel access priority class is adjusted is adjusted according to the first adjustment policy or the second adjustment policy also includes that the contention window corresponding to the channel access priority class corresponding to the first SL transmission is adjusted according to the first adjustment policy or the second adjustment policy. In the embodiment, in the case where the feedback success rate of the second SL transmission reaches the preset feedback success rate threshold, it indicates that the window length value of the current contention window corresponding to the second SL transmission is relatively great and may be reduced appropriately. That is, each contention window corresponding to each channel access priority class is adjusted according to the first adjustment policy, or the contention window corresponding to the channel access priority class corresponding to the first SL transmission is adjusted to the first adjustment policy. In the case where the feedback success rate of the second SL transmission does not reach the preset feedback success rate threshold, it indicates that the window length value of the current contention window corresponding to the second SL transmission is relatively small and may be increased appropriately. That is, each contention window corresponding to each channel access priority class is adjusted according to the second adjustment policy, or the contention window corresponding to the channel access priority class corresponding to the first SL transmission is adjusted to the second adjustment policy.

In an embodiment, that the feedback success rate of the second SL transmission is determined according to the feedback information of the second SL transmission in the SL cast type includes that when the second SL transmission is of a first groupcast type in which the feedback information is the NACK information, the number of pieces of feedback information in a groupcast transmission is determined or it is determined whether the feedback information in the groupcast transmission is detected; and that the feedback success rate of the second SL transmission is determined according to the number of pieces of feedback information or whether the feedback information is detected. The first groupcast type refers to that the SL cast type is groupcast. Moreover, the feedback information includes the NACK information fed back by using the same resource. In the embodiment, the feedback success rate of the second SL transmission is determined according to the number of pieces of feedback information or whether the feedback information in the groupcast transmission is detected.

In an embodiment, that which the contention window adjustment policy of the first SL transmission is determined according to the feedback success rate and the preset feedback success rate threshold includes one of the following.

When the feedback success rate of the second SL transmission reaches the preset feedback success rate threshold, each contention window corresponding to each channel access priority class is adjusted according to the first adjustment policy, or the contention window corresponding to the channel access priority class corresponding to the first SL transmission is adjusted according to the first adjustment policy; or when the feedback success rate of the second SL transmission does not reach the preset feedback success rate threshold, each contention window corresponding to each channel access priority class is adjusted according to the second adjustment policy, or the contention window corresponding to the channel access priority class corresponding to the first SL transmission is adjusted according to the second adjustment policy.

In the embodiment, the first groupcast type is a groupcast type in which only the NACK information is fed back. In the case where the second SL transmission does not detect the feedback information, it indicates that the feedback success rate of the second SL transmission reaches the preset feedback success rate threshold. In the embodiment, in the case where the feedback success rate of the second SL transmission reaches the preset feedback success rate threshold, the contention window corresponding to the channel access priority class corresponding to the first SL transmission may be adjusted according to the first adjustment policy or the second adjustment policy. That is, the window length value of the contention window corresponding to the channel access priority class corresponding to the first SL transmission is reduced or increased.

In an embodiment, that the contention window adjustment policy of the first SL transmission is determined according to the feedback success rate and the preset feedback success rate threshold includes one of the following.

When the feedback success rate of the second SL transmission reaches the preset feedback success rate threshold, each contention window corresponding to each channel access priority class is adjusted according to the third adjustment policy, or the contention window corresponding to the channel access priority class corresponding to the first SL transmission is adjusted according to the third adjustment policy; or when the feedback success rate of the second SL transmission does not reach the preset feedback success rate threshold, each contention window corresponding to each channel access priority class is adjusted according to the second adjustment policy, or the contention window corresponding to the channel access priority class corresponding to the first SL transmission is adjusted according to the second adjustment policy. In the embodiment, the first groupcast type is a groupcast type in which only the NACK information is fed back. In the case where the second SL transmission does not detect the feedback information, it indicates that the feedback success rate of the second SL transmission reaches the preset feedback success rate threshold. In the embodiment, in the case where the feedback success rate of the second SL transmission reaches the preset feedback success rate threshold, the contention window corresponding to the channel access priority class corresponding to the first SL transmission may be adjusted according to the second adjustment policy or the third adjustment policy. That is, the window length value of the contention window corresponding to the channel access priority class corresponding to the first SL transmission is increased or maintained.

In an embodiment, that the contention window adjustment policy of the first SL transmission is determined according to the feedback success rate and the preset feedback success rate threshold includes one of the following.

When the feedback success rate of the second SL transmission reaches the preset feedback success rate threshold, each contention window corresponding to each channel access priority class is adjusted according to the first adjustment policy, or the contention window corresponding to the channel access priority class corresponding to the first SL transmission is adjusted according to the first adjustment policy; or when the feedback success rate of the second SL transmission does not reach the preset feedback success rate threshold, each contention window corresponding to each channel access priority class is adjusted according to the third adjustment policy, or the contention window corresponding to the channel access priority class corresponding to the first SL transmission is adjusted according to the third adjustment policy. In the embodiment, the first groupcast type is a groupcast type in which only the NACK information is fed back. In the case where the second SL transmission does not detect the feedback information, it indicates that the feedback success rate of the second SL transmission reaches the preset feedback success rate threshold. In the embodiment, in the case where the feedback success rate of the second SL transmission reaches the preset feedback success rate threshold, the contention window corresponding to the channel access priority class corresponding to the first SL transmission may be adjusted according to the first adjustment policy or the third adjustment policy. That is, the window length value of the contention window corresponding to the channel access priority class corresponding to the first SL transmission is reduced or maintained.

In an embodiment, the second SL transmission is of a second groupcast type in which the feedback information is the ACK information or the NACK information. That the contention window adjustment policy of the first SL transmission is determined according to the feedback information and the SL cast type includes one of the following.

When the first communication node receives at least the ACK information, each contention window corresponding to each channel access priority class is adjusted according to the first adjustment policy, or the contention window corresponding to the channel access priority class corresponding to the first SL transmission is adjusted according to the first adjustment policy; or when the first communication node does not receive the ACK information, each contention window corresponding to each channel access priority class is adjusted according to the second adjustment policy, or the contention window corresponding to the channel access priority class corresponding to the first SL transmission is adjusted according to the second adjustment policy. In the embodiment, in the case where the second SL transmission is of the second groupcast type, if the feedback information of the second SL transmission is that only the ACK information is received or the ACK information and NACK information are received, each contention window corresponding to each channel access priority class is adjusted according to the first adjustment policy, or the contention window corresponding to the channel access priority class corresponding to the first SL transmission is adjusted according to the first adjustment policy; and if the feedback information of the second SL transmission is that only the NACK information is received or no feedback information is received, each contention window corresponding to each channel access priority class is adjusted according to the second adjustment policy, or the contention window corresponding to the channel access priority class corresponding to the first SL transmission is adjusted according to the second adjustment policy.

In an embodiment, the second SL transmission is of the second groupcast type. The second groupcast type is that the same resource is used to feed back the ACK information or the NACK information.

That the contention window adjustment policy of the first SL transmission is determined according to the feedback information and the SL cast type includes one of the following.

When the first communication node receives only the ACK information, each contention window corresponding to each channel access priority class is adjusted according to the first adjustment policy, or the contention window corresponding to the channel access priority class corresponding to the first SL transmission is adjusted according to the first adjustment policy; when the first communication node receives the ACK information and the NACK information, each contention window corresponding to each channel access priority class is adjusted according to the third adjustment policy, or the contention window corresponding to the channel access priority class corresponding to the first SL transmission is adjusted according to the third adjustment policy; or when the first communication node does not receive the ACK information, each contention window corresponding to each channel access priority class is adjusted according to the second adjustment policy, or the contention window corresponding to the channel access priority class corresponding to the first SL transmission is adjusted according to the second adjustment policy. In the embodiment, in the case where the second SL transmission is of the second groupcast type, if the feedback information of the second SL transmission is that only the ACK information is received, each contention window corresponding to each channel access priority class is adjusted according to the first adjustment policy, or the contention window corresponding to the channel access priority class corresponding to the first SL transmission is adjusted according to the first adjustment policy; if the feedback information of the second SL transmission is that the ACK information and NACK information are received, each contention window corresponding to each channel access priority class is adjusted according to the third adjustment policy, or the contention window corresponding to the channel access priority class corresponding to the first SL transmission is adjusted according to the third adjustment policy; and if the feedback information of the second SL transmission is that only the NACK information is received or no feedback information is received, each contention window corresponding to each channel access priority class is adjusted according to the second adjustment policy, or the contention window corresponding to the channel access priority class corresponding to the first SL transmission is adjusted according to the second adjustment policy.

In an embodiment, the second SL transmission is of the second groupcast type. The second groupcast type is that the same resource is used to feed back the ACK information or the NACK information. That the contention window adjustment policy of the first SL transmission is determined according to the feedback information and the SL cast type includes one of the following.

When the first communication node receives only the ACK information, each contention window corresponding to each channel access priority class is adjusted according to the first adjustment policy, or the contention window corresponding to the channel access priority class corresponding to the first SL transmission is adjusted according to the first adjustment policy; or when the first communication node receives only the NACK information, receives both the ACK information and the NACK information, or receives no feedback information, each contention window corresponding to each channel access priority class is adjusted according to the second adjustment policy, or the contention window corresponding to the channel access priority class corresponding to the first SL transmission is adjusted according to the second adjustment policy. In the embodiment, in the case where the second SL transmission is of the second groupcast type, if the feedback information of the second SL transmission is that only the ACK information is received, each contention window corresponding to each channel access priority class is adjusted according to the first adjustment policy, or the contention window corresponding to the channel access priority class corresponding to the first SL transmission is adjusted according to the first adjustment policy; and if the feedback information of the second SL transmission is that only the NACK information is received, or both the ACK information and NACK information are received, or no feedback information is received, each contention window corresponding to each channel access priority class is adjusted according to the second adjustment policy, or the contention window corresponding to the channel access priority class corresponding to the first SL transmission is adjusted according to the second adjustment policy.

In an embodiment, the second SL transmission is of a third groupcast type. The second communication node of the third groupcast type uses corresponding resources to feed back the ACK information or the NACK information. That the contention window adjustment policy of the first SL transmission is determined according to the feedback information and the SL cast type includes the following.

The number of pieces of ACK information from the feedback information of the second SL transmission in a groupcast transmission, the ratio of the pieces of ACK information, the number of second communication nodes corresponding to the pieces of ACK information, or the ratio of the second communication nodes corresponding to the pieces of ACK information is determined when the second SL transmission is a groupcast transmission; and the contention window adjustment policy of the first SL transmission is determined according to the number of pieces of ACK information, the ratio of the pieces of ACK information, the number of second communication nodes corresponding to the pieces of ACK information, or the ratio of the second communication nodes corresponding to the pieces of ACK information. In the embodiment, in the case where the SL cast type of the second SL transmission is groupcast and where each second communication node uses corresponding resources to feed back each piece of ACK information or each piece of NACK information, the first communication node may accurately determine the number of second communication nodes feeding back the pieces of ACK information and the number of second communication nodes feeding back pieces of NACK information. The number of pieces of ACK information is the same as the number of second communication nodes corresponding to the pieces of ACK information. The ratio of the pieces of ACK information is the same as the ratio of the second communication nodes corresponding to the pieces of ACK information.

In an embodiment, that the contention window adjustment policy of the first SL transmission is determined according to the number of pieces of ACK information or the number of second communication nodes corresponding to the pieces of ACK information includes one of the following.

When the number of pieces of ACK information or the number of second communication nodes corresponding to the pieces of ACK information is greater than or equal to a first threshold, each contention window corresponding to each channel access priority class is adjusted according to the first adjustment policy, or the contention window corresponding to the channel access priority class corresponding to the first SL transmission is adjusted according to the first adjustment policy; or when the number of pieces of ACK information and the number of second communication nodes corresponding to the pieces of ACK information is less than a second threshold, each contention window corresponding to each channel access priority class is adjusted according to the second adjustment policy, or a contention window corresponding to a channel access priority class corresponding to the second SL transmission is adjusted according to the first adjustment policy. The first threshold is greater than or equal to the second threshold. In the embodiment, in the case where the number of pieces of ACK information or the number of second communication nodes corresponding to the pieces of ACK information is greater than the first threshold, it indicates that the window length value of the contention window corresponding to the second SL transmission is relatively great and may be reduced appropriately. That is, each contention window corresponding to each channel access priority class is adjusted according to the first adjustment policy, or the contention window corresponding to the channel access priority class corresponding to the first SL transmission is adjusted to the first adjustment policy. Correspondingly, in the case where the number of pieces of ACK information or the number of second communication nodes corresponding to the pieces of ACK information is less than the second threshold, it indicates that the window length value of the contention window corresponding to the second SL transmission is relatively small and may be increased appropriately. That is, each contention window corresponding to each channel access priority class is adjusted according to the second adjustment policy, or the contention window corresponding to the channel access priority class corresponding to the first SL transmission is adjusted to the second adjustment policy. In an embodiment, the first threshold may be equal to the second threshold or may be greater than the second threshold. Exemplarily, the first threshold and the second threshold are each an integer greater than 1 and less than the total number of second communication nodes. Exemplarily, each of the first threshold and the second threshold may be 1 or a positive integer of the total number of second communication nodes minus 1.

In an embodiment, that the contention window adjustment policy of the first SL transmission is determined according to the ratio of the pieces of ACK information or the ratio of the second communication nodes corresponding to the pieces of ACK information includes one of the following.

When the ratio of the pieces of ACK information or the ratio of the second communication nodes corresponding to the pieces of ACK information is greater than or equal to a third threshold, each contention window corresponding to each channel access priority class is adjusted according to the first adjustment policy, or the contention window corresponding to the channel access priority class corresponding to the first SL transmission is adjusted according to the first adjustment policy; or when the ratio of the pieces of ACK information and the ratio of the second communication nodes corresponding to the pieces of ACK information is less than a fourth threshold, each contention window corresponding to each channel access priority class is adjusted according to the second adjustment policy, or the contention window corresponding to the channel access priority class corresponding to the first SL transmission is adjusted according to the second adjustment policy. The third threshold is greater than or equal to the fourth threshold. In the embodiment, in the case where the ratio of the pieces of ACK information or the ratio of the second communication nodes corresponding to the pieces of ACK information is greater than the third threshold, it indicates that the window length value of the contention window corresponding to the second SL transmission is relatively great and may be reduced appropriately. That is, each contention window corresponding to each channel access priority class is adjusted according to the first adjustment policy, or the contention window corresponding to the channel access priority class corresponding to the first SL transmission is adjusted to the first adjustment policy. Correspondingly, in the case where the ratio of the pieces of ACK information or the ratio of the second communication nodes corresponding to the pieces of ACK information is less than the fourth threshold, it indicates that the window length value of the contention window corresponding to the second SL transmission is relatively small and may be increased appropriately. That is, each contention window corresponding to each channel access priority class is adjusted according to the second adjustment policy, or the contention window corresponding to the channel access priority class corresponding to the first SL transmission is adjusted to the second adjustment policy. In an embodiment, the third threshold may be equal to the fourth threshold or may be greater than the fourth threshold. Exemplarily, the third threshold and the fourth threshold are each a real number from 0 to 1. For example, the third threshold or the fourth threshold may be 10% or 100%.

In an embodiment, the feedback information and the SL cast type satisfy a preset feedback condition. That the contention window adjustment policy of the first SL transmission is determined according to the feedback information and the SL cast type includes the following.

Each contention window corresponding to each channel access priority class is adjusted according to the third adjustment policy, or the contention window corresponding to the channel access priority class corresponding to the first SL transmission is adjusted according to the third adjustment policy. In the embodiment, if the second SL transmission is of the first groupcast type for which feedback is enabled, the first communication node may adjust each contention window corresponding to each channel access priority class according to the third adjustment policy or adjust the contention window corresponding to the channel access priority class corresponding to the first SL transmission according to the third adjustment policy.

In an embodiment, the feedback information and the SL cast type satisfy the preset feedback condition. That the contention window adjustment policy of the first SL transmission is determined according to the feedback information and the SL cast type includes the following.

A channel busy ratio of a channel where the first communication node is located is determined, and the contention window adjustment policy of the first SL transmission is determined according to the channel busy ratio. In the embodiment, the channel busy ratio may be a value from 0 to 1. In the embodiment, the first communication node selects the contention window target length of a corresponding channel access priority class according to the channel busy ratio obtained through measurement, then determines the contention window adjustment policy of the first SL transmission according to the contention window target length, and adjusts the contention window current length of the first SL transmission according to the contention window adjustment policy.

In an embodiment, that the contention window adjustment policy of the first SL transmission is determined according to the channel busy ratio includes the following.

The contention window target length corresponding to the first SL transmission is determined according to the channel busy ratio and the channel access priority class corresponding to the first SL transmission, and the contention window corresponding to the first SL transmission is determined according to the contention window target length.

In an embodiment, that the contention window adjustment policy of the first SL transmission is determined according to the channel busy ratio includes the following.

When the channel busy ratio is greater than or equal to a first busy ratio threshold, each contention window corresponding to each channel access priority class is adjusted according to the second adjustment policy, or the contention window corresponding to the channel access priority class corresponding to the first SL transmission is adjusted according to the second adjustment policy; when the channel busy ratio is less than a second busy ratio threshold, each contention window corresponding to each channel access priority class is adjusted according to the first adjustment policy, or the contention window corresponding to the channel access priority class corresponding to the first SL transmission is adjusted according to the first adjustment policy; and when the channel busy ratio is greater than the second busy ratio threshold and less than the first busy ratio threshold, each contention window corresponding to each channel access priority class is adjusted according to the third adjustment policy, or the contention window corresponding to the channel access priority class corresponding to the first SL transmission is adjusted according to the third adjustment policy. The first busy ratio threshold is greater than or equal to the second busy ratio threshold. In the embodiment, the first busy ratio threshold and the second busy ratio threshold may be the same value or different values, which is not limited hereto and may be set according to actual situations.

In an embodiment, the preset feedback condition includes one of the following.

The second SL transmission is a transmission for which feedback information is disabled; the first SL transmission is a transmission for which the feedback information is disabled; the first SL transmission is a transmission for which the feedback information is enabled and is of an SL cast type for which feedback is enabled, the SL cast type is a unicast transmission, and the second communication node uses the same resource to transmit the feedback information; the second SL transmission is of the SL cast type for which feedback is enabled, and the first communication node does not acquire the feedback information; the first communication node does not acquire the feedback information of the second SL transmission, and the first SL transmission does not include a retransmission; or the first communication node does not acquire the feedback information of the second SL transmission, and the first SL transmission is a transmission performed in a time window after a detecting duration corresponding to the second SL transmission.

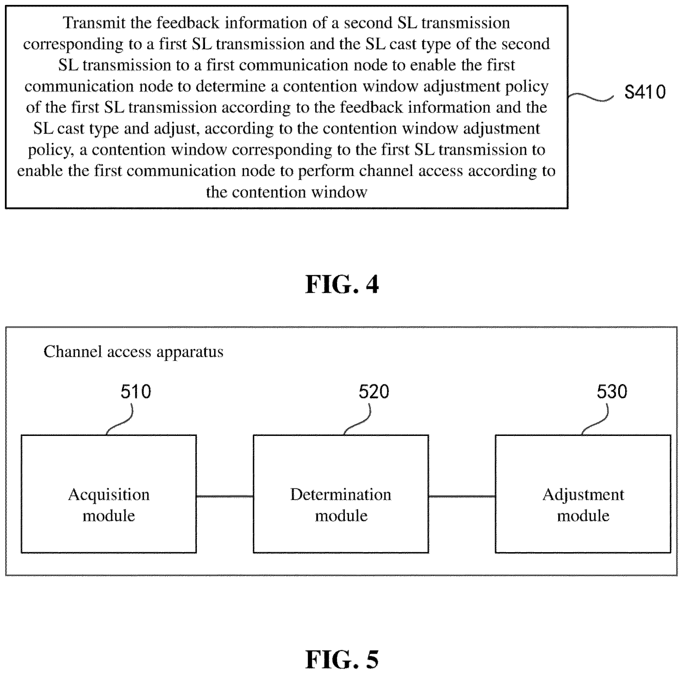

In an embodiment, FIG. 4 is a flowchart of another channel access method according to an embodiment of the present application. This embodiment is applied to a second communication node. The second communication node may be a terminal (for example, a user equipment). As shown in FIG. 4, the channel access method in this embodiment includes S210.

In S410, the feedback information of a second SL transmission corresponding to a first SL transmission and the SL cast type of the second SL transmission are transmitted to a first communication node to enable the first communication node to determine a contention window adjustment policy of the first SL transmission according to the feedback information and the SL cast type, and a contention window corresponding to the first SL transmission is adjusted according to the contention window adjustment policy to enable the first communication node to perform channel access according to the contention window. The second SL transmission is a transmission performed before the first SL transmission and within the channel occupation time acquired by using a first channel access type.

In an embodiment, that the second SL transmission is the transmission performed before the first SL transmission and within the channel occupation time acquired by using the first channel access type includes one of that the second SL transmission is the latest transmission performed within the acquired channel occupation time, that the second SL transmission is the first transmission performed within the acquired channel occupation time, or that second SL transmissions are a plurality of transmissions performed within the acquired channel occupation time.

In an embodiment, the contention window adjustment policy includes one of a first adjustment policy, a second adjustment policy, or a third adjustment policy. The first adjustment policy is configured to adjust the window length value of the contention window to the allowed minimum value or the next allowed smaller window length value. The second adjustment policy is configured to adjust the window length value of the contention window to the next allowed greater window length value. The third adjustment policy is configured to keep the window length value of the contention window unchanged.

For the explanation of each parameter in the channel access method applied to the second communication node, reference may be made to the description in the channel access method applied to the first communication node in the preceding embodiments, which is not repeated here.

In an embodiment, by way of example, the SL cast type of the second SL transmission is the unicast transmission for which feedback is enabled, and the feedback information is ACK information and/or NACK information. In this case, the procedure of determining the contention window adjustment policy of the first SL transmission is described. In the embodiment, the HARQ feedback information of the second SL transmission is the ACK information and/or the NACK information. The SL cast type is the unicast transmission for which feedback is enabled. Determining the HARQ feedback success rate of the second SL transmission and judging whether the success rate satisfies requirements includes the examples below.

In an example, each second SL transmission corresponds to one piece of HARQ feedback information; that is, the HARQ feedback based on SL transmission blocks is used. If the HARQ feedback information corresponding to at least one second SL transmission is the ACK information, it is determined that the success rate satisfies requirements. Satisfying requirements refers to reaching a preset feedback success rate threshold.

In an example, each second SL transmission among one or more second SL transmissions may include at least one data block. Each data block corresponds to respective HARQ feedback information. That is, the HARQ feedback information based on data blocks is used. In this case, when the number or ratio of data blocks when the HARQ feedback information is the ACK information is greater than or equal to a threshold T, it is determined that the success rate satisfies requirements. In an example, a data block is a code block (CB), a code block group (CBG), or a data unit.

In an example, if it is determined that the success rate satisfies requirements (that is, reaches the preset feedback success rate threshold), the UE adjusts, according to the first adjustment policy, each contention window corresponding to each channel access priority class. Adjusting each contention window corresponding to each channel access priority class also includes adjusting a contention window corresponding to a CAPC of the first SL transmission. In an example, if it is determined that the success rate satisfies requirements, the UE may also adjust, according to the first adjustment policy, the contention window corresponding to the CAPC of the first SL transmission.

In an example, if it is determined that the success rate does not satisfy requirements (that is, does not reach the preset feedback success rate threshold), the UE adjusts, according to the second adjustment policy, each contention window corresponding to each channel access priority class. Adjusting each contention window corresponding to each channel access priority class also includes adjusting the contention window corresponding to the CAPC of the first SL transmission. In an example, if it is determined that the success rate does not satisfy requirements, the UE may also adjust, according to the second adjustment policy, the contention window corresponding to the CAPC of the first SL transmission.

In the subsequent embodiments of the present application, unless otherwise specified, that the UE adjusts a contention window represents that the UE adjusts each contention window corresponding to each channel access priority class or adjusts the contention window corresponding to the CAPC of the first SL transmission. In the subsequent embodiments of the present application, groupcast may also include broadcast. For example, one broadcast enables NACK feedback, which may also be referred to as groupcast type 1.

In an embodiment, by way of example, the SL cast type of the second SL transmission is a groupcast transmission for which feedback is enabled, the feedback information is only the NACK information fed back by using the same resource, the first communication node is a transmitting UE, and the second communication node is a receiving UE. In this case, the procedure of determining the contention window adjustment policy of the first SL transmission is described. In the embodiment, the HARQ feedback information of the second SL transmission is the NACK information. The SL cast type is a first groupcast type for which feedback is enabled. Determining the HARQ feedback success rate of the second SL transmission and judging whether the success rate satisfies requirements includes the examples below.

In an example, each second SL transmission corresponds to one piece of HARQ feedback information. Only when the HARQ feedback information is the NACK information, the HARQ feedback information can be fed back. When the HARQ feedback information is ACK information, no feedback information is fed back.

For the first groupcast type, the transmitting UE cannot know the accurate number of receiving UEs performing feedback. If a receiving UE does not perform feedback, the transmitting UE cannot distinguish between the situations below.

In case 1, the receiving UE receives an SL transmission correctly and does not need to perform feedback.

In case 2, the receiving UE detects the SL transmission but fails to receive the SL transmission; however, NACK cannot be fed back due to no channel obtained through contention.

In case 3, the receiving UE does not detect the preceding SL transmission and thus does not perform feedback; that is, the receiving UE fails to perform receiving in fact.

In the embodiment, the UE may mistakenly determine that the receiving in cases 2 and 3 is successful; however, the receiving in cases 2 and 3 fails. Additionally, for the first groupcast type, even if the NACK information can be detected, the transmitting UE cannot determine whether a receiving UE performs receiving correctly but can determine only that some UEs do not perform receiving correctly. The transmitting UE cannot know the number of UEs performing receiving successfully or the ratio of the UEs performing receiving successfully to all receiving UEs.

In an example, in the case of x second SL transmissions, the HARQ feedback information corresponding to at least x second SL transmissions are non-feedback information. That is, no feedback information is detected, and thus it is determined that the success rate satisfies requirements. In an example, if the HARQ feedback information corresponding to the first or last second SL transmission is non-feedback information, that is, if no feedback information is detected, it is determined that the success rate satisfies requirements.

In an example, if it is determined that the success rate satisfies requirements, the UE adjusts, according to the first adjustment policy, each contention window corresponding to each channel access priority class or the contention window corresponding to the CAPC of the first SL transmission; otherwise, the UE adjusts, according to the second adjustment policy, each contention window corresponding to each channel access priority class or the contention window corresponding to the CAPC of the first SL transmission. In the example, the UE adjusts a contention window according to a manner similar to unicast.

In an example, if it is determined that the success rate satisfies requirements, the UE adjusts, according to the third adjustment policy, each contention window corresponding to each channel access priority class or the contention window corresponding to the CAPC of the first SL transmission; otherwise, the UE adjusts, according to the second adjustment policy, each contention window corresponding to each channel access priority class or the contention window corresponding to the CAPC of the first SL transmission.

In an example, if it is determined that the success rate satisfies requirements, the UE adjusts, according to the first adjustment policy, each contention window corresponding to each channel access priority class or the contention window corresponding to the CAPC of the first SL transmission; otherwise, the UE adjusts, according to the third adjustment policy, each contention window corresponding to each channel access priority class or the contention window corresponding to the CAPC of the first SL transmission.

In an embodiment, by way of example, the SL cast type of the second SL transmission is a groupcast transmission for which feedback is enabled, the feedback information is the ACK information and NACK information fed back by using the same resource, the first communication node is a transmitting UE, and the second communication node is a receiving UE. In this case, the procedure of determining the contention window adjustment policy of the first SL transmission is described. In the embodiment, the HARQ feedback information of the second SL transmission is the ACK information and the NACK information. The SL cast type is a second groupcast type for which feedback is enabled. Determining the HARQ feedback success rate of the second SL transmission and judging whether the success rate satisfies requirements includes the examples below.

In an example, each second SL transmission corresponds to one piece of HARQ feedback information. If receiving is performed incorrectly, the NACK information is fed back; and if receiving is performed correctly, the ACK information is fed back. In the second groupcast type, the ACK information may be fed back, which is similar to the first groupcast type. Multiple receiving UEs feed back the ACK information through the same resource or feed back the NACK information through the same resource. The transmitting UE cannot distinguish between the receiving UEs. For the second groupcast type, the transmitting UE cannot know the accurate number of receiving UEs feeding back ACK and the number of receiving UEs feeding back NACK. Additionally, that the transmitting UE receives HARQ feedback includes the cases below.

In case 1, the transmitting UE receives only the ACK information.

In case 2, the transmitting UE receives only the NACK information.

In case 3, the transmitting UE receives the ACK information and the NACK information.

In case 4, the transmitting UE receives no feedback information.

In an example, if the feedback of the second SL transmission belongs to case 1 or 3, that is, if the feedback information includes at least the ACK information, the UE adjusts, according to the first adjustment policy, each contention window corresponding to each channel access priority class or the contention window corresponding to the CAPC of the first SL transmission; otherwise, the UE adjusts a contention window according to the second adjustment policy.

In an example, if the feedback of the second SL transmission belongs to case 1, the UE adjusts, according to the first adjustment policy, each contention window corresponding to each channel access priority class or the contention window corresponding to the CAPC of the first SL transmission; if the feedback of the second SL transmission belongs to case 3, the UE adjusts a contention window according to the third adjustment policy; otherwise, the UE adjusts a contention window according to the second adjustment policy.

In an example, if the feedback of the second SL transmission belongs to case 1, the UE adjusts, according to the first adjustment policy, each contention window corresponding to each channel access priority class or the contention window corresponding to the CAPC of the first SL transmission; otherwise, the UE adjusts a contention window according to the second adjustment policy.

In an example, the preceding second SL transmission is at least one of one or more SL transmissions, the first second SL transmission, or the last second SL transmission.

In an embodiment, by way of example, the SL cast type of the second SL transmission is a groupcast transmission for which feedback is enabled, the feedback information is the ACK information and NACK information fed back by using corresponding resources, the first communication node is a transmitting UE, and the second communication node is a receiving UE. In this case, the procedure of determining the contention window adjustment policy of the first SL transmission is described. In the embodiment, the HARQ feedback information of the second SL transmission is the ACK information and the NACK information. The SL cast type is a third groupcast type for which feedback is enabled. Determining the HARQ feedback success rate of the second SL transmission and judging whether the success rate satisfies requirements includes the examples below.

In an example, each second SL transmission corresponds to one piece of HARQ feedback information. If each receiving UE performs receiving incorrectly, the NACK information is fed back; and if each receiving UE performs receiving correctly, the ACK information is fed back. Different from the first groupcast type and the second groupcast type, in the third groupcast type, each receiving UE feeds back the ACK information or the NACK information through a corresponding resource. The transmitting UE knows the total number m of receiving UEs. For example, the receiving UEs know that the group size is m, and then the transmitting UE is excluded and the number of receiving UEs is m - 1. Similarly, through detecting feedback, the transmitting UE may know the number of receiving UEs feeding back the ACK information and the number of receiving UEs feeding back the NACK information. It is assumed that the number of pieces of detected ACK information is k.

In an example, if the number k of pieces of ACK information corresponding to second SL transmissions is greater than or equal to a threshold T1, the UE adjusts, according to the first adjustment policy, each contention window corresponding to each channel access priority class or the contention window corresponding to the CAPC of the first SL transmission; otherwise, the UE adjusts the contention window according to the second adjustment policy.

In an example, if the ratio of the pieces of ACK information corresponding to second SL transmissions, that is, the ratio of UEs feeding back the ACK information to all the receiving UEs in the group, is denoted as k/(m - 1) and is greater than or equal to a threshold T2, the UE adjusts, according to the first adjustment policy, each contention window corresponding to each channel access priority class or the contention window corresponding to the CAPC of the first SL transmission; otherwise, the UE adjusts the contention window according to the second adjustment policy.

In an example, the preceding thresholds T1 and T2 are each a pre-defined, configured, or pre-configured value. For example, T1 is a value between 1 and m - 1 in general. In a special case, T1 may also be 1 or m - 1. T2 is a value between 0 and 1 in general, for example, 10%. In another special case, T2 may also be 100%; that is, that all the receiving UEs feed back ACK satisfies the success rate condition.

In an example, the preceding second SL transmission includes one or more SL transmissions, at least one of one or more SL transmissions, the first SL transmission, or the last second SL transmission.

In an embodiment, the HARQ feedback information of the second SL transmission is the NACK information fed back by using the same resource, and the SL cast type is the first groupcast type for which feedback is enabled. In an example, the UE may perform a contention window operation not based on the success rate but adjust a contention window based on the methods below.

In manner 1, in an example, if the second SL transmission is of the first groupcast type for which feedback is enabled, the UE adjusts, according to the third adjustment policy, each contention window corresponding to each channel access priority class or the contention window corresponding to the CAPC of the first SL transmission. That is, whether feedback is received or not, the previous contention window is used but no contention window is adjusted.

In manner 2, in an example, if the second SL transmission is of the first groupcast type for which feedback is enabled, the UE determines a channel busy ratio (CBR, or channel occupied ratio, which is a value between 0 and 1) and adjusts, according to the channel busy ratio, each contention window corresponding to each channel access priority class or the contention window corresponding to the CAPC of the first SL transmission.

In an example, contention window sizes corresponding to different channel busy ratios may be configured or pre-configured. By way of example, CBRs are shown in Table 1.

**Table 1**

| | CAPC 1 | CAPC 2 | CAPC 3 | CAPC 4 |
|---|---|---|---|---|
| CBR <= T1 | CW_{1,a1} | CW_{2,b1} | CW_{3.c1} | CW_{4,d1} |
| T1 < CBR <= T2 | | | | |
| ... | ... | ... | ... | ... |
| CBR > Ti | CW_{1,ai} | CW_{2,bi} | CW_{3,ci} | CW_{4,di} |

According to the channel busy ratio obtained through measurement, the UE uses Table 1 to select an appropriate contention window for each channel access priority class.

In manner 3, in an example, if the second SL transmission is of the first groupcast type for which feedback is enabled, at least one of the examples below is included.

A threshold 1 (that is, the first busy ratio threshold in the preceding embodiment) of the channel busy ratio is configured or pre-configured. If the channel busy ratio is greater than or equal to the threshold 1, the UE adjusts, according to the second adjustment policy, each contention window corresponding to each channel access priority class or the contention window corresponding to the CAPC of the first SL transmission.

A threshold 2 (that is, the second busy ratio threshold in the preceding embodiment) of the channel busy ratio is configured or pre-configured. If the channel busy ratio is less than or equal to the threshold 2, the UE adjusts, according to the first adjustment policy, each contention window corresponding to each channel access priority class or the contention window corresponding to the CAPC of the first SL transmission.

If the channel busy ratio is between the threshold 1 and the threshold 2, the UE adjusts, according to the third adjustment policy, each contention window corresponding to each channel access priority class or the contention window corresponding to the CAPC of the first SL transmission.

In an example, the threshold 1 and the threshold 2 may be the same value. That is, one threshold needs to be configured or pre-configured.

In an embodiment, in the case where the HARQ feedback information of the second SL transmission is the NACK information or where the SL cast type is the first groupcast type for which feedback is enabled, the contention window adjustment policy defined by the channel busy ratio in the preceding embodiments is also applicable to the scenarios below. That is, that the second SL transmission is of the first groupcast type for which feedback is enabled in the preceding embodiment may be replaced with the scenarios below.

In scenario 1, the second SL transmission belongs to the HARQ feedback information or SL cast type of disabled feedback. For example, the second SL transmission may be broadcast, the unicast of disabled feedback, or groupcast.

In scenario 2, the first SL transmission belongs to the HARQ feedback information or SL cast type of disabled feedback. For example, the first SL transmission may be broadcast, the unicast of disabled feedback, or groupcast.

In scenario 3, the first SL transmission is of the first groupcast type for which feedback is enabled.

In scenario 4, the second SL transmission is of the SL cast type for which feedback is enabled; however, the UE does not acquire the feedback result of the second SL transmission, that is, the feedback result of the second SL transmission cannot be used.

In scenario 5, the UE does not acquire the feedback result of the second SL transmission; moreover, the first SL transmission does not include retransmission, or the first SL transmission is a transmission performed within one time window (Tw) after the reference duration of the second SL transmission.

In an embodiment, FIG. 5 is a structural block diagram of a channel access apparatus according to an embodiment of the present application. This embodiment is applied to a first communication node. As shown in FIG. 5, this embodiment includes an acquisition module 510, a determination module 520, and an adjustment module 530.

The acquisition module 510 is configured to acquire the feedback information of a second SL transmission corresponding to a first sidelink (SL) transmission and the SL cast type. The second SL transmission is a transmission performed before the first SL transmission and within the channel occupation time acquired by using a first channel access type.

The determination module 520 is configured to determine a contention window adjustment policy of the first SL transmission according to the feedback information and the SL cast type of the second SL transmission.

The adjustment module 530 is configured to adjust, according to the contention window adjustment policy, a contention window corresponding to the first SL transmission to enable the first communication node to perform channel access according to the contention window.

In an embodiment, that the second SL transmission is the transmission performed before the first SL transmission and within the channel occupation time acquired by using the first channel access type includes one of that the second SL transmission is the latest transmission performed within the acquired channel occupation time, that the second SL transmission is the first transmission performed within the acquired channel occupation time, or that second SL transmissions are a plurality of transmissions performed within the acquired channel occupation time.

In an embodiment, the contention window adjustment policy includes one of a first adjustment policy, a second adjustment policy, or a third adjustment policy. The first adjustment policy is configured to adjust the window length value of the contention window to the allowed minimum value or the next allowed smaller window length value. The second adjustment policy is configured to adjust the window length value of the contention window to the next allowed larger window length value. The third adjustment policy is configured to keep the window length value of the contention window unchanged.

In an embodiment, the determination module 520 includes a first determination unit and a second determination unit.

The first determination unit is configured to determine a feedback success rate of the second SL transmission according to the feedback information of the second SL transmission in the SL cast type. The second determination unit is configured to determine the contention window adjustment policy of the first SL transmission according to the feedback success rate and a preset feedback success rate threshold.

In one embodiment, the first determination unit includes a first determination sub-unit and a second determination sub-unit.

The first determination sub-unit is configured to determine that the second SL transmission is of the unicast cast type and determine the number of second SL transmissions when the feedback information is ACK information. The second determination sub-unit is configured to determine the feedback success rate of the second SL transmission according to the number of second SL transmissions when the feedback information is the ACK information.

In an embodiment, each second SL transmission includes at least one data block. Each data block corresponds to one piece of feedback information. The SL cast type is a unicast transmission. The first determination unit includes a third determination sub-unit and a fourth determination sub-unit.

The third determination sub-unit is configured to determine the number of data blocks when the feedback information is the ACK information when the second SL transmission is the unicast transmission. The fourth determination sub-unit is configured to determine the feedback success rate of the second SL transmission according to the number of data blocks of the ACK information.

In an embodiment, the second determination unit is configured to perform one of the following.

When the feedback success rate of the second SL transmission reaches the preset feedback success rate threshold, each contention window corresponding to each channel access priority class is adjusted according to the first adjustment policy; when the feedback success rate of the second SL transmission reaches the preset feedback success rate threshold, a contention window corresponding to a channel access priority class corresponding to the first SL transmission is adjusted according to the first adjustment policy; when the feedback success rate of the second SL transmission does not reach the preset feedback success rate threshold, each contention window corresponding to each channel access priority class is adjusted according to the second adjustment policy; or when the feedback success rate of the second SL transmission does not reach the preset feedback success rate threshold, the contention window corresponding to the channel access priority class corresponding to the first SL transmission is adjusted according to the second adjustment policy.

In an embodiment, the first determination unit includes a fifth determination sub-unit and a sixth determination sub-unit.

The fifth determination sub-unit is configured to, when the second SL transmission is of a first groupcast type in which the feedback information is the negative acknowledgement (NACK) information, determine the number of pieces of feedback information in a groupcast transmission or determine whether the feedback information in the groupcast transmission is detected. The sixth determination sub-unit is configured to determine the feedback success rate of the second SL transmission according to the number of pieces of feedback information or whether the feedback information is detected.

In an embodiment, the second determination unit is configured to perform one of the following.

When the feedback success rate of the second SL transmission reaches the preset feedback success rate threshold, each contention window corresponding to each channel access priority class is adjusted according to the first adjustment policy, or the contention window corresponding to the channel access priority class corresponding to the first SL transmission is adjusted according to the first adjustment policy; or when the feedback success rate of the second SL transmission does not reach the preset feedback success rate threshold, each contention window corresponding to each channel access priority class is adjusted according to the second adjustment policy, or the contention window corresponding to the channel access priority class corresponding to the first SL transmission is adjusted according to the second adjustment policy.

In an embodiment, the second determination unit is configured to perform one of the following.

When the feedback success rate of the second SL transmission reaches the preset feedback success rate threshold, each contention window corresponding to each channel access priority class is adjusted according to the third adjustment policy, or the contention window corresponding to the channel access priority class corresponding to the first SL transmission is adjusted according to the third adjustment policy; or when the feedback success rate of the second SL transmission does not reach the preset feedback success rate threshold, each contention window corresponding to each channel access priority class is adjusted according to the second adjustment policy, or the contention window corresponding to the channel access priority class corresponding to the first SL transmission is adjusted according to the second adjustment policy.

In an embodiment, the second determination unit is configured to perform one of the following.

When the feedback success rate of the second SL transmission reaches the preset feedback success rate threshold, each contention window corresponding to each channel access priority class is adjusted according to the first adjustment policy, or the contention window corresponding to the channel access priority class corresponding to the first SL transmission is adjusted according to the first adjustment policy; or when the feedback success rate of the second SL transmission does not reach the preset feedback success rate threshold, each contention window corresponding to each channel access priority class is adjusted according to the third adjustment policy, or the contention window corresponding to the channel access priority class corresponding to the first SL transmission is adjusted according to the third adjustment policy.

In an embodiment, the second SL transmission is of a second groupcast type in which the feedback information is the ACK information or the NACK information. The determination module 520 is configured to perform one of the following.

When the first communication node receives at least the ACK information, each contention window corresponding to each channel access priority class is adjusted according to the first adjustment policy, or the contention window corresponding to the channel access priority class corresponding to the first SL transmission is adjusted according to the first adjustment policy; when the first communication node does not receive the ACK information, each contention window corresponding to each channel access priority class is adjusted according to the second adjustment policy, or the contention window corresponding to the channel access priority class corresponding to the first SL transmission is adjusted according to the second adjustment policy.

In an embodiment, the second SL transmission is of the second groupcast type. The second groupcast type is that the same resource is used to feed back the ACK information or the NACK information.

The determination module 520 is configured to perform one of the following.

When the first communication node receives only the ACK information, each contention window corresponding to each channel access priority class is adjusted according to the first adjustment policy, or the contention window corresponding to the channel access priority class corresponding to the first SL transmission is adjusted according to the first adjustment policy; when the first communication node receives the ACK information and the NACK information, each contention window corresponding to each channel access priority class is adjusted according to the third adjustment policy, or the contention window corresponding to the channel access priority class corresponding to the first SL transmission is adjusted according to the third adjustment policy; or when the first communication node does not receive the ACK information, each contention window corresponding to each channel access priority class is adjusted according to the second adjustment policy, or the contention window corresponding to the channel access priority class corresponding to the first SL transmission is adjusted according to the second adjustment policy.

In an embodiment, the second SL transmission is of the second groupcast type, where the second groupcast type is that the same resource is used to feed back the ACK information or the NACK information.

The determination module 520 is configured to perform one of the following.

When the first communication node receives only the ACK information, each contention window corresponding to each channel access priority class is adjusted according to the first adjustment policy, or the contention window corresponding to the channel access priority class corresponding to the first SL transmission is adjusted according to the first adjustment policy; or when the first communication node receives only the NACK information, receives both the ACK information and the NACK information, or receives no feedback information, each contention window corresponding to each channel access priority class is adjusted according to the second adjustment policy, or the contention window corresponding to the channel access priority class corresponding to the first SL transmission is adjusted according to the second adjustment policy.

In an embodiment, the second SL transmission is of a third groupcast type. A second communication node of the third groupcast type uses corresponding resources to feed back the ACK information or the NACK information.

The determination module 520 includes a third determination unit and a fourth determination unit.

The third determination unit is configured to determine one of the number of pieces of ACK information from the feedback information of the second SL transmission in a groupcast transmission, the ratio of the pieces of ACK information, the number of second communication nodes corresponding to the pieces of ACK information, or the ratio of the second communication nodes corresponding to the pieces of ACK information. The fourth determination unit is configured to determine the contention window adjustment policy of the first SL transmission according to the number of pieces of ACK information, the ratio of the pieces of ACK information, the number of second communication nodes corresponding to the pieces of ACK information, or the ratio of the second communication nodes corresponding to the pieces of ACK information.

In an embodiment, that the contention window adjustment policy of the first SL transmission is determined according to the number of pieces of ACK information or the number of second communication nodes corresponding to the pieces of ACK information includes one of the following.

When the number of pieces of ACK information or the number of second communication nodes corresponding to the pieces of ACK information is greater than or equal to a first threshold, each contention window corresponding to each channel access priority class is adjusted according to the first adjustment policy, or the contention window corresponding to the channel access priority class corresponding to the first SL transmission is adjusted according to the first adjustment policy; or when the number of pieces of ACK information and the number of second communication nodes corresponding to the pieces of ACK information is less than a second threshold, each contention window corresponding to each channel access priority class is adjusted according to the second adjustment policy, or a contention window corresponding to a channel access priority class corresponding to the second SL transmission is adjusted according to the first adjustment policy. The first threshold is greater than or equal to the second threshold.

In an embodiment, that the contention window adjustment policy of the first SL transmission is determined according to the ratio of the pieces of ACK information or the ratio of the second communication nodes corresponding to the pieces of ACK information includes one of the following.

When the ratio of the pieces of ACK information or the ratio of the second communication nodes corresponding to the pieces of ACK information is greater than or equal to a third threshold, each contention window corresponding to each channel access priority class is adjusted according to the first adjustment policy, or the contention window corresponding to the channel access priority class corresponding to the first SL transmission is adjusted according to the first adjustment policy; or when the ratio of the pieces of ACK information and the ratio of the second communication nodes corresponding to the pieces of ACK information is less than a fourth threshold, each contention window corresponding to each channel access priority class is adjusted according to the second adjustment policy, or the contention window corresponding to the channel access priority class corresponding to the first SL transmission is adjusted according to the second adjustment policy. The third threshold is greater than or equal to the fourth threshold.

In an embodiment, the feedback information and the SL cast type satisfy a preset feedback condition. The determination module 520 is configured to adjust, according to the third adjustment policy, each contention window corresponding to each channel access priority class or adjust, according to the third adjustment policy, the contention window corresponding to the channel access priority class corresponding to the first SL transmission.

In an embodiment, the feedback information and the SL cast type satisfy the preset feedback condition. The determination module 520 includes a fifth determination unit and a sixth determination unit.

The fifth determination unit is configured to determine a channel busy ratio of a channel where the first communication node is located. The sixth determination unit is configured to determine the contention window adjustment policy of the first SL transmission according to the channel busy ratio.

In an embodiment, the sixth determination unit includes a seventh determination sub-unit and an adjustment sub-unit.

The seventh determination sub-unit is configured to determine, according to the channel busy ratio and the channel access priority class corresponding to the first SL transmission, the contention window target length corresponding to the first SL transmission. The adjustment sub-unit is configured to determine, according to the contention window target length, the contention window corresponding to the first SL transmission.

In an embodiment, the sixth determination unit is configured to perform the following.

When the channel busy ratio is greater than or equal to a first busy ratio threshold, each contention window corresponding to each channel access priority class is adjusted according to the second adjustment policy, or the contention window corresponding to the channel access priority class corresponding to the first SL transmission is adjusted according to the second adjustment policy; when the channel busy ratio is less than a second busy ratio threshold, each contention window corresponding to each channel access priority class is adjusted according to the first adjustment policy, or the contention window corresponding to the channel access priority class corresponding to the first SL transmission is adjusted according to the first adjustment policy; and when the channel busy ratio is greater than the second busy ratio threshold and less than the first busy ratio threshold, each contention window corresponding to each channel access priority class is adjusted according to the third adjustment policy, or the contention window corresponding to the channel access priority class corresponding to the first SL transmission is adjusted according to the third adjustment policy. The first busy ratio threshold is greater than or equal to the second busy ratio threshold.

In an embodiment, the preset feedback condition includes one of the following.

The second SL transmission is a transmission for which feedback information is disabled; the first SL transmission is a transmission for which the feedback information is disabled; the first SL transmission is a transmission for which the feedback information is enabled and is of an SL cast type for which feedback is enabled, the SL cast type is a unicast transmission, and the second communication node uses the same resource to transmit the feedback information; the second SL transmission is of the SL cast type for which feedback is enabled, and the first communication node does not acquire the feedback information; the first communication node does not acquire the feedback information of the second SL transmission, and the first SL transmission does not include a retransmission; or the first communication node does not acquire the feedback information of the second SL transmission, and the first SL transmission is a transmission performed in a time window after a detecting duration corresponding to the second SL transmission.

The channel access apparatus provided in this embodiment is configured to perform the channel access method applied to the first communication node according to the embodiment shown in FIG. 3. The implementation principles and technical effects of the channel access apparatus provided in this embodiment are similar to those of the channel access method applied to the first communication node according to the embodiment shown in FIG. 3 and thus are not repeated here.

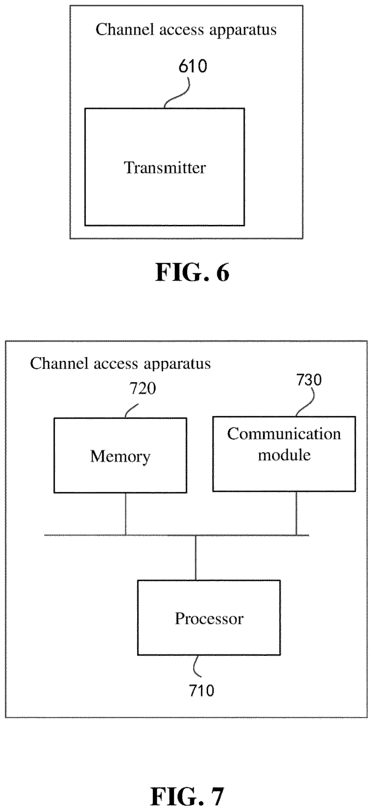

In an embodiment, FIG. 6 is a structural block diagram of another channel access apparatus according to an embodiment of the present application. This embodiment is applied to a second communication node. As shown in FIG. 6, this embodiment includes a transmitter 610.

The transmitter 610 is configured to transmit the feedback information of a second SL transmission corresponding to a first SL transmission and the SL cast type of the second SL transmission to a first communication node to enable the first communication node to determine a contention window adjustment policy of the first SL transmission according to the feedback information and the SL cast type and adjust, according to the contention window adjustment policy, a contention window corresponding to the first SL transmission to enable the first communication node to perform channel access according to the contention window. The second SL transmission is a transmission performed before the first SL transmission and within the channel occupation time acquired by using a first channel access type.

The channel access apparatus provided in this embodiment is configured to perform the channel access method applied to the second communication node according to the embodiment shown in FIG. 4. The implementation principles and technical effects of the channel access apparatus provided in this embodiment are similar to those of the channel access method applied to the first communication node according to the embodiment shown in FIG. 4 and thus are not repeated here.

In an embodiment, FIG. 7 is a structural diagram of a channel access device according to an embodiment of the present application. As shown in FIG. 7, the device provided in the present application includes a processor 710, a memory 720, and a communication module 730. One or more processors 710 may be provided in the device, with one processor 710 shown as an example in FIG. 7. One or more memories 720 may be provided in the device, with one memory 720 shown as an example in FIG. 7. The processor 710, the memory 720 and the communication module 730 in the device may be connected via a bus or in other manners. FIG. 7 shows the connection via a bus as an example. In the embodiment, the device may be a terminal (for example, a user equipment).

As a computer-readable storage medium, the memory 720 may be configured to store software programs and computer-executable programs and modules, such as program instructions/modules (for example, the acquisition module 510, the determination module 520 and the adjustment module 520 in the channel access apparatus) corresponding to the device according to any embodiment of the present application. The memory 720 may include a program storage region and a data storage region, where the program storage region may store an operating system and an application program required by at least one function, and the data storage region may store data created depending on the use of the device. Additionally, the memory 720 may include a high-speed random-access memory and may also include a nonvolatile memory, such as at least one magnetic disk memory, a flash memory, or another nonvolatile solid-state memory. In some examples, the memory 720 may include memories which are remotely disposed relative to the processor 710, and these remote memories may be connected to the device via a network. Examples of the preceding network include, but are not limited to, the Internet, an intranet, a local area network, a mobile communication network, and a combination thereof.

The communication module 730 is configured to communicatively interact with other synchronization nodes.

In the case where the channel access device is a first communication node, the preceding device may be configured to perform the channel access method applied to the first communication node according to any preceding embodiment and has corresponding functions and effects.

In the case where the channel access device is a second communication node, the preceding device may be configured to perform the channel access method applied to the second communication node according to any preceding embodiment and has corresponding functions and effects.

An embodiment of the present application further provides a storage medium including computer-executable instructions. When the computer-executable instructions are executed by a computer process, a channel access method applied to a first communication node is performed. The method includes that the feedback information of a second SL transmission corresponding to a first sidelink (SL) transmission and the SL cast type of the second SL transmission are acquired, where the second SL transmission is a transmission performed before the first SL transmission and within the channel occupation time acquired by using a first channel access type; that a contention window adjustment policy of the first SL transmission is determined according to the feedback information and the SL cast type; and that a contention window corresponding to the first SL transmission is adjusted according to the contention window adjustment policy to enable the first communication node to perform channel access according to the contention window.

An embodiment of the present application further provides a storage medium including computer-executable instructions. When the computer-executable instructions are executed by a computer process, a channel access method applied to a second communication node is performed. The method includes that the feedback information of a second SL transmission corresponding to a first SL transmission and the SL cast type of the second SL transmission are transmitted to a first communication node to enable the first communication node to determine a contention window adjustment policy of the first SL transmission according to the feedback information and the SL cast type and that a contention window corresponding to the first SL transmission is adjusted according to the contention window adjustment policy to enable the first communication node to perform channel access according to the contention window. The second SL transmission is a transmission performed before the first SL transmission and within the channel occupation time acquired by using a first channel access type.

It is to be understood by those skilled in the art that the term "user equipment" encompasses any suitable type of wireless user equipment, for example, a mobile phone, a portable data processing apparatus, a portable web browser or a vehicle-mounted mobile station.

Generally speaking, embodiments of the present application may be implemented in hardware or special-purpose circuits, software, logic or any combination thereof. For example, some aspects may be implemented in hardware while other aspects may be implemented in firmware or software executable by a controller, a microprocessor, or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM) or an optical memory device and system (for example, a digital video disc (DVD) or a compact disc (CD)). The computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA) and a processor based on a multi-core processor architecture.

## Claims

**1.** A channel access method, applied to a first communication node and comprising:
acquiring feedback information of a second sidelink (SL) transmission corresponding to a first SL transmission and an SL cast type of the second SL transmission, wherein the second SL transmission is a transmission performed before the first SL transmission and within a channel occupation time acquired by using a first channel access type;
determining a contention window adjustment policy of the first SL transmission according to the feedback information and the SL cast type; and
adjusting, according to the contention window adjustment policy, a contention window corresponding to the first SL transmission to enable the first communication node to perform channel access according to the contention window.

**2.** The method according to claim 1, wherein that the second SL transmission is the transmission performed before the first SL transmission and within the channel occupation time acquired by using the first channel access type comprises one of that: the second SL transmission is a latest transmission performed within the acquired channel occupation time;
the second SL transmission is a first transmission performed within the acquired channel occupation time; or
the second SL transmission comprises a plurality of transmissions performed within the acquired channel occupation time.

**3.** The method according to claim 1, wherein the contention window adjustment policy comprises one of: a first adjustment policy, wherein the first adjustment policy is configured to adjust a window length value of the contention window to an allowed minimum value or a next smaller allowed window length value; a second adjustment policy, wherein the second adjustment policy is configured to adjust a window length value of the contention window to a next higher allowed window length value; or
a third adjustment policy, wherein the third adjustment policy is configured to keep a window length value of the contention window unchanged.

**4.** The method according to claim 1, wherein determining the contention window adjustment policy of the first SL transmission according to the feedback information and the SL cast type comprises:
determining a feedback success rate of the second SL transmission according to the feedback information of the second SL transmission in the SL cast type; and
determining the contention window adjustment policy of the first SL transmission according to the feedback success rate and a preset feedback success rate threshold.

**5.** The method according to claim 4, wherein determining the feedback success rate of the second SL transmission according to the feedback information of the second SL transmission in the SL cast type comprises:
determining that the second SL transmission is of a unicast cast type and determining a number of second SL transmissions whose feedback information is acknowledgement (ACK) information; and
determining the feedback success rate of the second SL transmission according to the number of second SL transmissions whose feedback information is the ACK information.

**6.** The method according to claim 4, wherein each second SL transmission comprises at least one data block, each data block corresponds to one piece of feedback information, and the SL cast type is a unicast transmission; and
determining the feedback success rate of the second SL transmission according to the feedback information of the second SL transmission in the SL cast type comprises:
determining a number of data blocks of the second SL transmission when the second SL transmission is the unicast transmission, wherein each of the data blocks corresponds to one piece of feedback information which is ACK information; and
determining the feedback success rate of the second SL transmission according to the number of data blocks corresponding to the ACK information.

**7.** The method according to claim 5 or 6, wherein determining the contention window adjustment policy of the first SL transmission according to the feedback success rate and the preset feedback success rate threshold comprises one of:
in response to the feedback success rate of the second SL transmission reaching the preset feedback success rate threshold, adjusting, according to a first adjustment policy, a contention window corresponding to each channel access priority class;
in response to the feedback success rate of the second SL transmission reaching the preset feedback success rate threshold, adjusting, according to the first adjustment policy, a contention window corresponding to a channel access priority class corresponding to the first SL transmission;
in response to the feedback success rate of the second SL transmission not reaching the preset feedback success rate threshold, adjusting, according to a second adjustment policy, a contention window corresponding to each channel access priority class; or
in response to the feedback success rate of the second SL transmission not reaching the preset feedback success rate threshold, adjusting, according to a second adjustment policy, a contention window corresponding to a channel access priority class corresponding to the first SL transmission.

**8.** The method according to claim 4, wherein determining the feedback success rate of the second SL transmission according to the feedback information of the second SL transmission in the SL cast type comprises:
in response to the second SL transmission being of a first groupcast type in which the feedback information is negative acknowledgement (NACK) information, determining a number of pieces of feedback information in a groupcast transmission or determining whether the feedback information in the groupcast transmission is detected; and
determining the feedback success rate of the second SL transmission according to the number of pieces of feedback information or whether the feedback information is detected.

**9.** The method according to claim 8, wherein determining the contention window adjustment policy of the first SL transmission according to the feedback success rate and the preset feedback success rate threshold comprises one of:
in response to the feedback success rate of the second SL transmission reaching the preset feedback success rate threshold, adjusting, according to a first adjustment policy, a contention window corresponding to each channel access priority class, or adjusting, according to a first adjustment policy, a contention window corresponding to a channel access priority class corresponding to the first SL transmission; or
in response to the feedback success rate of the second SL transmission not reaching the preset feedback success rate threshold, adjusting, according to a second adjustment policy, a contention window corresponding to each channel access priority class, or adjusting, according to a second adjustment policy, a contention window corresponding to a channel access priority class corresponding to the first SL transmission.

**10.** The method according to claim 8, wherein determining the contention window adjustment policy of the first SL transmission according to the feedback success rate and the preset feedback success rate threshold comprises one of:
in response to the feedback success rate of the second SL transmission reaching the preset feedback success rate threshold, adjusting, according to a third adjustment policy, a contention window corresponding to each channel access priority class, or adjusting, according to a third adjustment policy, a contention window corresponding to a channel access priority class corresponding to the first SL transmission; or
in response to the feedback success rate of the second SL transmission not reaching the preset feedback success rate threshold, adjusting, according to a second adjustment policy, a contention window corresponding to each channel access priority class, or adjusting, according to a second adjustment policy, a contention window corresponding to a channel access priority class corresponding to the first SL transmission.

**11.** The method according to claim 8, wherein determining the contention window adjustment policy of the first SL transmission according to the feedback success rate and the preset feedback success rate threshold comprises one of:
in response to the feedback success rate of the second SL transmission reaching the preset feedback success rate threshold, adjusting, according to a first adjustment policy, a contention window corresponding to each channel access priority class, or adjusting, according to a first adjustment policy, a contention window corresponding to a channel access priority class corresponding to the first SL transmission; or
in response to the feedback success rate of the second SL transmission not reaching the preset feedback success rate threshold, adjusting, according to a third adjustment policy, a contention window corresponding to each channel access priority class, or adjusting, according to a third adjustment policy, a contention window corresponding to a channel access priority class corresponding to the first SL transmission.

**12.** The method according to claim 1, wherein the second SL transmission is of a second groupcast type in which the feedback information is ACK information or NACK information, and determining the contention window adjustment policy of the first SL transmission according to the feedback information and the SL cast type comprises one of:
in response to the first communication node receiving at least the ACK information, adjusting, according to a first adjustment policy, a contention window corresponding to each channel access priority class, or adjusting, according to a first adjustment policy, a contention window corresponding to a channel access priority class corresponding to the first SL transmission; or
in response to the first communication node not receiving the ACK information, adjusting, according to a second adjustment policy, a contention window corresponding to each channel access priority class, or adjusting, according to a second adjustment policy, a contention window corresponding to a channel access priority class corresponding to the first SL transmission.

**13.** The method according to claim 1, wherein the second SL transmission is of a second groupcast type, wherein the second groupcast type is that a same resource is used to feed back ACK information or NACK information; and
determining the contention window adjustment policy of the first SL transmission according to the feedback information and the SL cast type comprises one of:
in response to the first communication node receiving only ACK information, adjusting, according to a first adjustment policy, a contention window corresponding to each channel access priority class, or adjusting, according to a first adjustment policy, a contention window corresponding to a channel access priority class corresponding to the first SL transmission;
in response to the first communication node receiving the ACK information and the NACK information, adjusting, according to a third adjustment policy, a contention window corresponding to each channel access priority class, or adjusting, according to a third adjustment policy, a contention window corresponding to a channel access priority class corresponding to the first SL transmission; or
in response to the first communication node not receiving the ACK information, adjusting, according to a second adjustment policy, a contention window corresponding to each channel access priority class, or adjusting, according to a second adjustment policy, a contention window corresponding to a channel access priority class corresponding to the first SL transmission.

**14.** The method according to claim 1, wherein the second SL transmission is of a second groupcast type, wherein the second groupcast type is that a same resource is used to feed back ACK information or NACK information; and
determining the contention window adjustment policy of the first SL transmission according to the feedback information and the SL cast type comprises one of:
in response to the first communication node receiving only the ACK information, adjusting, according to a first adjustment policy, a contention window corresponding to each channel access priority class, or adjusting, according to a first adjustment policy, a contention window corresponding to a channel access priority class corresponding to the first SL transmission; or
in response to the first communication node receiving only the NACK information, or receiving both the ACK information and the NACK information, or receiving no feedback information, adjusting, according to a second adjustment policy, a contention window corresponding to each channel access priority class, or adjusting, according to a second adjustment policy, a contention window corresponding to a channel access priority class corresponding to the first SL transmission.

**15.** The method according to claim 1, wherein the second SL transmission is of a third groupcast type, wherein a second communication node of the third groupcast type uses corresponding resources to feed back ACK information or NACK information; and
determining the contention window adjustment policy of the first SL transmission according to the feedback information and the SL cast type comprises:
determining one of: a number of pieces of ACK information from the feedback information of the second SL transmission in a groupcast transmission, a ratio of the pieces of ACK information, a number of second communication nodes corresponding to the pieces of ACK information, or a ratio of second communication nodes corresponding to the pieces of ACK information; and
determining the contention window adjustment policy of the first SL transmission according to the number of pieces of ACK information, the ratio of the pieces of ACK information, the number of second communication nodes corresponding to the pieces of ACK information, or the ratio of second communication nodes corresponding to the pieces of ACK information. 16. The method according to claim 15, wherein determining the contention window adjustment policy of the first SL transmission according to the number of pieces of ACK information or the number of second communication nodes corresponding to the pieces of ACK information comprises one of:
in response to the number of pieces of ACK information or the number of second communication nodes corresponding to the pieces of ACK information being greater than or equal to a first threshold, adjusting, according to a first adjustment policy, a contention window corresponding to each channel access priority class, or adjusting, according to a first adjustment policy, a contention window corresponding to a channel access priority class corresponding to the first SL transmission; or
in response to the number of pieces of ACK information or the number of second communication nodes corresponding to the pieces of ACK information being less than a second threshold, adjusting, according to a second adjustment policy, a contention window corresponding to each channel access priority class, or adjusting, according to a first adjustment policy, a contention window corresponding to a channel access priority class corresponding to the second SL transmission, wherein the first threshold is greater than or equal to the second threshold.

**17.** The method according to claim 15, wherein determining the contention window adjustment policy of the first SL transmission according to the ratio of the pieces of ACK information or the ratio of the second communication nodes corresponding to the pieces of ACK information comprises one of:
in response to the ratio of the pieces of ACK information or the ratio of the second communication nodes corresponding to the pieces of ACK information being greater than or equal to a third threshold, adjusting, according to a first adjustment policy, a contention window corresponding to each channel access priority class, or adjusting, according to a first adjustment policy, a contention window corresponding to a channel access priority class corresponding to the first SL transmission; or
in response to the ratio of the pieces of ACK information or the ratio of the second communication nodes corresponding to the pieces of ACK information being less than a fourth threshold, adjusting, according to a second adjustment policy, a contention window corresponding to each channel access priority class, or adjusting, according to a second adjustment policy, a contention window corresponding to a channel access priority class corresponding to the first SL transmission, wherein the third threshold is greater than or equal to the fourth threshold.

**18.** The method according to claim 1, further comprises:in response to the feedback information and the SL cast type satisfying a preset feedback condition,
determining the contention window adjustment policy of the first SL transmission according to the feedback information and the SL cast type comprises:
adjusting, according to a third adjustment policy, a contention window corresponding to each channel access priority class, or adjusting, according to a third adjustment policy, a contention window corresponding to a channel access priority class corresponding to the first SL transmission.

**19.** The method according to claim 1, wherein the feedback information and the SL cast type satisfy a preset feedback condition; and
determining the contention window adjustment policy of the first SL transmission according to the feedback information and the SL cast type comprises:
determining a channel busy ratio of a channel where the first communication node is located; and
determining the contention window adjustment policy of the first SL transmission according to the channel busy ratio.

**20.** The method according to claim 19, wherein determining the contention window adjustment policy of the first SL transmission according to the channel busy ratio comprises:
determining, according to the channel busy ratio and a channel access priority class corresponding to the first SL transmission, a target length of the contention window corresponding to the first SL transmission; and
adjusting, according to the target length of the contention window, the contention window corresponding to the first SL transmission.

**21.** The method according to claim 19, wherein determining the contention window adjustment policy of the first SL transmission according to the channel busy ratio comprises:
in response to the channel busy ratio being greater than or equal to a first busy ratio threshold, adjusting, according to a second adjustment policy, each contention window corresponding to each channel access priority class, or adjusting, according to a second adjustment policy, a contention window corresponding to a channel access priority class corresponding to the first SL transmission;
in response to the channel busy ratio being less than a second busy ratio threshold, adjusting, according to a first adjustment policy, a contention window corresponding to each channel access priority class, or adjusting, according to a first adjustment policy, a contention window corresponding to a channel access priority class corresponding to the first SL transmission; or
in response to the channel busy ratio being greater than a second busy ratio threshold and less than a first busy ratio threshold, adjusting, according to a third adjustment policy, a contention window corresponding to each channel access priority class, or adjusting, according to a third adjustment policy, a contention window corresponding to a channel access priority class corresponding to the first SL transmission, wherein the first busy ratio threshold is greater than or equal to the second busy ratio threshold.

**22.** The method according to any one of claims 18-21, wherein the preset feedback condition comprises one of:
the second SL transmission is a transmission for which feedback information is disabled ;
the first SL transmission is a transmission for which feedback information is disabled;
the first SL transmission is a transmission for which feedback information is enabled and is of an SL cast type for which feedback is enabled, the SL cast type is a unicast transmission, and a second communication node uses a same resource to transmit the feedback information;
the second SL transmission is of an SL cast type for whichfeedback is enabled, and the first communication node does not acquire the feedback information;
the first communication node does not acquire the feedback information of the second SL transmission, and the first SL transmission does not comprise a retransmission; or
the first communication node does not acquire the feedback information of the second SL transmission, and the first SL transmission is a transmission performed in a time window after a detecting duration corresponding to the second SL transmission.

**23.** A channel access method, applied to a second communication node and comprising:
transmitting to a first communication node feedback information of a second sidelink (SL) transmission, corresponding to a first SL transmission, and an SL cast type of the second SL transmission to enable the first communication node to determine a contention window adjustment policy of the first SL transmission according to the feedback information and the SL cast type, adjust, according to the contention window adjustment policy, a contention window corresponding to the first SL transmission and perform channel access according to the contention window,
wherein the second SL transmission is a transmission performed before the first SL transmission and within channel occupation time acquired by using a first channel access type.

**24.** A channel access device, comprising a communication module, a memory, and at least one processor, wherein
the communications module is configured to perform communication interaction with another communication node;
the memory is configured to store at least one program; and
the at least one program, when executed by the at least one processor, causes the at least one processor to perform the channel access method according to any one of claims 1 to 22, or 23.

**25.** A storage medium for storing a computer program, wherein the computer program is configured to, when executed by a processor, perform the channel access method according to any one of claims 1 to 22, or 23.
